# FASCICULE DE BREVET EUROPEEN

(11) **EP 3 479 167 B1**
(45) Date de publication et mention de la délivrance du brevet: **01.12.2021**
(21) Numéro de dépôt: 17734341.5
(22) Date de dépôt: 30.06.2017
(51) Int. Cl.: G02F 1/1333, G02B 27/01

(54) **ECRAN À CRISTAUX LIQUIDES, DISPOSITIF DE GÉNÉRATION D'IMAGE COMPRENANT UN TEL ÉCRAN ET AFFICHEUR TÊTE HAUTE COMPRENANT UN TEL DISPOSITIF**
FLÜSSIGKRISTALLBILDSCHIRM, BILDERZEUGENDE VORRICHTUNG MIT EINEM SOLCHEN BILDSCHRIM UND HEAD-UP DISPLAY MIT EINER SOLCHEN VORRICHTUNG
LIQUID CRYSTAL DISPLAY, IMAGE GENERATING DEVICE INCLUDING SUCH A DISPLAY AND HEAD-UP DISPLAY INCLUDING SUCH A DEVICE

(30) Priorité: 30.06.2016 FR 1656244
(43) Date de publication de la demande: 08.05.2019
(73) Titulaire: Valeo Comfort and Driving Assistance, 94046 Créteil Cedex (FR)
(72) Inventeur: BLANC, Eric, 94046 Créteil CEDEX (FR)
(74) Mandataire: Delplanque, Arnaud
(86) Numéro de dépôt international: PCT/EP2017/066397
(87) Numéro de publication internationale: WO 2018/002373

(56) Documents cités:
- CN-U- 204 287 648
- CN-U- 204 462 592
- DE-A1-102014 206 586
- JP-A- 2004 309 819
- JP-A- 2004 354 606
- JP-A- 2005 148 658
- JP-A- 2005 313 733
- JP-A- 2007 279 089
- JP-A- 2009 151 249
- US-A1- 2009 207 327

## Description

### DOMAINE TECHNIQUE AUQUEL SE RAPPORTE L'INVENTION

La présente invention concerne les systèmes d'affichage.

Elle concerne plus particulièrement un écran à cristaux liquides, un dispositif de génération d'image comprenant un tel écran et un afficheur tête haute comprenant un tel dispositif.

L'invention s'applique particulièrement avantageusement dans le cas où l'on souhaite obtenir une image particulièrement lumineuse (comme par exemple dans les afficheurs tête haute de véhicule), ce qui entraîne un échauffement notable de l'écran.

### ARRIÈRE-PLAN TECHNOLOGIQUE

Le principe des afficheurs tête haute pour véhicule est de projeter des images, notamment utiles à la conduite, directement dans le champ de vision d'un conducteur.

Pour cela, les afficheurs tête haute comprennent en général un dispositif de génération d'images adapté à générer des images et un dispositif de projection des images générées adapté à transmettre ces images vers une lame semi-transparente placée dans le champ de vision du conducteur.

La plupart des dispositifs de génération d'images utilisés aujourd'hui comprennent une source de lumière rétroéclairant un écran à cristaux liquides adapté à générer les images. Cet écran absorbe une partie de la lumière qui le rétroéclaire, ce qui provoque son échauffement thermique, en particulier lorsque la luminosité ambiante rend nécessaire la projection d'une image particulièrement lumineuse.

Or, la température de l'écran est critique pour son bon fonctionnement, ce dernier risquant d'être endommagé, voire d'être rendu défectueux, par une température trop élevée. L'échauffement de l'écran peut par conséquent réduire sa durée de vie et conduire à son remplacement.

Il est donc nécessaire de trouver des solutions visant, dans ce contexte notamment mais également dans d'autres contextes, à refroidir un tel écran, ou à éviter son échauffement.

Un écran à cristaux liquides selon le préambule de la revendication 1 ci-jointe est décrit dans chacun des documents JP 2007 279089 A, JP 2004 309819 A, JP 2004 354606 A.

D'autres antériorités pertinentes sont divulguées dans les documents DE 10 2014 206586 A1, CN 204 287 648 U, JP 2009 151249 A, CN 204 462 592 U, US 2009/207327 A1, JP 2005 148658 A, JP 2005 313733 A.

### OBJET DE L'INVENTION

La présente invention propose un écran à cristaux liquides comprenant une matrice d'éléments à cristaux liquides, des transistors associés chacun à l'un desdits éléments et des pistes conductrices (généralement opaques) de connexion auxdits transistors, un dispositif d'absorption de chaleur comprenant une pluralité d'éléments longitudinaux disposés chacun au droit d'une desdites pistes conductrices de sorte à minimiser l'obstruction de la transmission d'une lumière, disposée de manière à éclairer l'écran à cristaux liquides, provoquée par ces éléments longitudinaux, et dans lequel au moins un élément longitudinal est une électrode d'alimentation d'une cellule à effet thermoélectrique.

L'écran comprend ainsi un dispositif d'absorption de chaleur qui permet un refroidissement de l'écran. Grâce à la disposition des éléments longitudinaux au droit de pistes conductrices, on minimise toutefois l'obstruction de la transmission de la lumière provoquée par ces éléments longitudinaux.

Les éléments longitudinaux précités sont par exemple métalliques (afin notamment de conduire la chaleur ou l'électricité, selon le mode de réalisation envisagé comme expliqué ci-dessous).

Les pistes conductrices sont par exemple réparties entre un premier ensemble desdites pistes conductrices qui s'étend selon une première direction et un second ensemble desdites pistes conductrices qui s'étend selon une seconde direction perpendiculaire à la première direction. Cette structure permet un adressage matriciel des transistors et donc des éléments à cristaux liquides.

On peut par exemple prévoir alors que (tous) les éléments longitudinaux s'étendent selon la première direction.

Selon une autre possibilité, un premier groupe d'éléments longitudinaux s'étend selon la première direction tandis qu'un second groupe d'éléments longitudinaux s'étend selon la seconde direction. On profite ainsi de la structure des pistes conductrices pour utiliser une grille d'éléments longitudinaux, en minimisant la gêne pour le passage de la lumière.

Dans un premier mode de réalisation, une pluralité desdits éléments longitudinaux est reliée à une plaque à au moins une de leurs extrémités. De tels éléments longitudinaux peuvent ainsi conduire la chaleur qu'ils absorbent jusqu'à la plaque, où cette chaleur peut être plus facilement évacuée.

On peut d'ailleurs prévoir de disposer la plaque au contact d'un élément dissipateur de chaleur, tel qu'un couvercle dissipateur de chaleur de l'écran.

Selon l'invention, au moins un élément longitudinal est une électrode d'alimentation d'une cellule à effet thermoélectrique (située par exemple au sein de l'écran). On utilise alors l'effet Peltier pour effectuer un refroidissement de l'écran.

Les éléments longitudinaux peuvent être interposés entre une vitre et la matrice d'éléments à cristaux liquides. Selon une autre possibilité, les éléments longitudinaux peuvent être disposés au contact d'un polariseur. Ils sont dans ce cas par exemple interposés entre le polariseur et une vitre, ou selon une autre possibilité, disposés sur une face externe du polariseur. Ces différentes possibilités sont d'ailleurs cumulables.

Le polariseur susmentionné peut d'ailleurs être le polariseur d'entrée ou le polariseur de sortie de l'écran à cristaux liquides.

L'invention propose par ailleurs un dispositif de génération d'image comprenant un écran à cristaux liquides tel que présenté ci-dessus, et une source de lumière disposée de manière à éclairer l'écran à cristaux liquides.

L'invention propose enfin un afficheur tête haute comprenant un tel dispositif de génération d'image et un dispositif de projection d'images adapté à transmettre en direction d'une lame semi-transparente les images générées par le dispositif de génération d'image.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un afficheur tête haute pour véhicule ;
- la figure 2 représente un premier exemple de réalisation d'un écran utile à comprendre l'invention ;
- la figure 3 est une vue en éclaté d'une partie de l'écran de la figure 2 ;
- la figure 4 représente un second exemple de réalisation d'un écran utile à comprendre l'invention ;
- la figure 5 est une vue en éclaté représentant certaines pièces de l'écran de la figure 4 ;
- la figure 6 représente un troisième exemple de réalisation d'un écran utile à comprendre l'invention ;
- la figure 7 représente une cellule thermoélectrique utilisable dans un mode de réalisation de l'invention.

Sur les figures, les proportions ne sont pas respectées afin de faire mieux ressortir la constitution des écrans présentés ci-dessous à titre d'exemples.

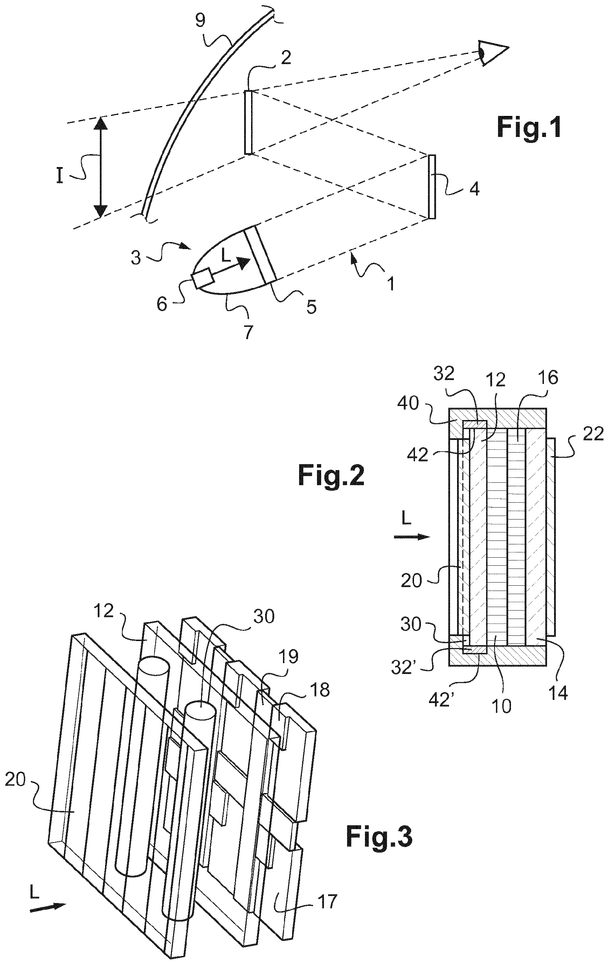

Sur la figure 1, on a schématiquement représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard.

À cet effet, l'afficheur 1 comprend une lame partiellement transparente 2, communément appelée lame semi-transparente 2, placée dans le champ de vision du conducteur, un dispositif de génération d'images 3 adapté à générer des images et un dispositif de projection 4 d'images adapté à renvoyer, en direction de ladite lame semi-transparente 2, les images générées par le dispositif de génération d'images 3.

Plus précisément, la lame semi-transparente 2 est ici un combineur 2, c'est-à-dire une lame semi-transparente dédiée à l'afficheur tête haute 1.

Un tel combineur 2 est ici placé entre le pare-brise 9 du véhicule et les yeux du conducteur.

En variante, la lame semi-transparente pourrait être confondue avec le pare-brise du véhicule. Autrement dit, dans cette variante, c'est le pare-brise du véhicule qui a la fonction de lame-semi transparente pour l'afficheur tête haute.

Par ailleurs, ici, le dispositif de projection d'images comprend un miroir de repliement 4 agencé de manière à réfléchir les images générées par le dispositif de génération 3 d'images en direction de la lame semi-transparente 2. Ici, ledit miroir de repliement est un miroir plan.

En variante, le dispositif de projection d'images pourrait comprendre une pluralité de miroirs et/ou d'autres éléments optiques tels qu'une lentille par exemple.

Le dispositif de génération 3 d'images comprend quant à lui au moins une source de lumière 6, un écran 5 rétroéclairé par cette source de lumière 6, et un réflecteur 7. On a ainsi schématiquement représenté par la flèche L sur les figures la transmission de la lumière de la source de lumière 6 vers l'écran 5.

La source de lumière 6 comprend au moins une diode électroluminescente (ou LED pour *"Light Emitting Diode"*), et en général une pluralité de telles diodes électroluminescentes.

Comme cela ressortira des exemples donnés dans la suite, l'écran 5 est un écran à cristaux liquides (ou LCD pour *"Liquid Crystal Display"*), par exemple à transistors en couche mince (ou TFT pour *"Thin-Film Transistor*").

La figure 2 présente un premier exemple de réalisation de l'écran 5.

Dans ce premier exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un polariseur d'entrée 20 ;
- une première vitre 12 ;
- une matrice de micro-polariseurs 10 ;
- une matrice d'éléments colorés 16 ;
- une seconde vitre 14 ;
- un polariseur de sortie 22.

Comme visible en figure 3, la matrice de micro-polariseurs 10 comprend une matrice d'éléments à cristaux liquides 17, des transistors 18 associés chacun à l'un desdits éléments à cristaux liquides 17 et des pistes conductrices 19 de connexion auxdits transistors 18.

Afin de pouvoir commander indépendamment chacun des transistors 18, un première ensemble de pistes conductrices 19 s'étend selon une première direction, tandis qu'un second ensemble de pistes conductrices 19 s'étend selon une seconde direction perpendiculaire à la première direction, chaque transistor étant situé à l'intersection d'une piste conductrice 19 du premier ensemble et d'une piste conductrice 19 du seconde ensemble.

Les pistes conductrices 19 sont en général opaques. Toutefois, dans un même ensemble, les pistes conductrices 19 voisines sont espacées l'une de l'autre avec interposition d'un élément à cristaux liquides, lequel est traversé par la lumière lors du fonctionnement afin d'impartir à cette lumière une polarisation souhaitée (déterminée en fonction de la commande du transistor 18 associé).

Le polariseur d'entrée 20 et le polariseur de sortie 22 sont ici des filtres polariseurs par absorption (d'où un échauffement important au niveau de ces polariseurs 20, 22). Le polariseur d'entrée 20 et le polariseur de sortie 22 ont respectivement un premier axe et un second axe perpendiculaires entre eux (dans le cadre de la technologie dite *"normalement éteint*", ou NB pour "*normally black*"). (On rappelle que l'axe d'un polariseur est la direction de polarisation rectiligne du faisceau lumineux après passage à travers le polariseur.)

Ainsi, si aucun élément de la matrice d'éléments à cristaux liquides 17 n'est activé, le faisceau lumineux entre le polariseur d'entrée 20 et le polariseur de sortie 22 sera polarisé selon le premier axe (axe du polariseur d'entrée 20) et aucune lumière ne sera donc émise en sortie du polariseur de sortie 22.

Par activation adaptée des éléments de la matrice d'éléments à cristaux liquides 17 (au moyen des transistors 18 commandés par un module de commande non représenté par l'intermédiaire des pistes conductrices 19), la polarisation de certaines parties du faisceau lumineux est modifiée au niveau de la matrice d'éléments à cristaux liquides 10 de sorte que de la lumière est émise en sortie du polariseur de sortie 22 au niveau de régions correspondants auxdites parties du faisceau lumineux.

Pour chaque pixel de l'écran 5, la matrice d'éléments colorés 16 comprend une pluralité d'éléments colorés (ici un élément rouge, un élément vert et un élément bleu) à travers chacun desquels il est possible de faire passer une intensité réglable de lumière par activation adaptée de l'élément correspondant de la matrice d'éléments à cristaux liquides 10, comme indiqué ci-dessus.

Dans le présent exemple de réalisation, comme bien visible en figure 3, on a placé sur la face de la première vitre 12 destinée à recevoir le polariseur d'entrée 20, avant dépôt du polariseur d'entrée 20, un ensemble d'éléments longitudinaux parallèles 30 reliés à chacune de leurs extrémités à une plaque 32, 32'.

Après dépôt du polariseur d'entrée 20, les éléments longitudinaux 30 se trouvent interposés entre le polariseur d'entrée 20 et la première vitre 12.

Les éléments longitudinaux 30 sont ici des fils métalliques (par exemple des fils de cuivre, d'aluminium ou de tungstène), dont la bonne conductivité thermique permet d'évacuer en direction des plaques 32, 32' la chaleur générée (par absorption de la lumière) au sein du polariseur d'entrée 20.

Dans une autre version, les fils peuvent être en tube de carbone.

Les plaques 32, 32' sont par exemple métalliques, éventuellement réalisées dans le même matériau que les éléments longitudinaux 30. Les plaques 32, 32' sont ici disposées au contact de la tranche de la première vitre 12. On peut d'ailleurs prévoir que le dimensionnement de l'ensemble plaques 32, 32' ― éléments longitudinaux 30 soit tel que cet ensemble puisse être monté sur la première vitre 12 avant dépôt du polariseur d'entrée 20.

Dans le mode de réalisation des figures 2 et 3, les éléments longitudinaux 30 s'étendent (tous) parallèlement les uns aux autres, selon la direction d'extension de l'un des deux ensembles précités de pistes conductrices 19.

Chaque élément longitudinal 30 est en outre disposé au droit d'une piste conductrice 19 afin de perturber au minimum la transmission de la lumière à travers l'écran 5, précisément à travers les éléments à cristaux liquides 17. La largeur des éléments longitudinaux 30 (c'est-à-dire leur diamètre dans le cas de fils) est de préférence (mais non nécessairement) inférieure à la largeur des pistes conductrices 19 ; les éléments longitudinaux 30 ne perturbent dans ce cas aucunement la transmission de la lumière à travers l'écran 5.

On peut prévoir en outre, lorsque le polariseur d'entrée 20 comporte des lignes conductrices parallèles (visant à ne laisser passer qu'une polarisation donnée de la lumière), que les éléments longitudinaux 30 s'étendent dans la même direction que les lignes conductrices parallèles du polariseur d'entrée 20, comme schématiquement représenté en figure 3. On évite ainsi des interférences néfastes entre ces lignes conductrices parallèles et les éléments longitudinaux 30.

L'écran 5 comprend également un couvercle dissipateur 40, ici métallique, qui s'étend sur le pourtour de l'écran 5, en entourant une partie au moins des éléments en forme de plaque 20, 12, 10, 14, 16.

Le couvercle dissipateur 40 est au contact de chacune des plaques 32, 32' sur une partie au moins de la surface extérieure de ces plaques 32, 32'. La chaleur absorbée au sein de l'écran 5 par les éléments longitudinaux 30, puis conduite par les éléments longitudinaux 30 jusqu'aux plaques 32, 32', peut ainsi être évacuée au niveau du couvercle dissipateur 40.

On prévoit par exemple, comme visible en figure 2, que chacune des plaques 32, 32' soit reçue dans un logement 42, 42' formé à cet effet dans le couvercle dissipateur 40.

Dans l'exemple qui vient d'être décrit, les éléments longitudinaux 30 sont solidaires des plaques 32, 32', mais séparés, avant assemblage, des autres pièces formant l'écran 5 (notamment le polariseur d'entrée 20 et la première vitre 12). On peut prévoir en variante que les éléments longitudinaux 30 soient déposés sur le polariseur d'entrée 20 ou sur la première vitre 12 avant assemblage.

Selon une autre variante, les éléments longitudinaux pourraient être interposés entre la première vitre 12 et la matrice de micro-polariseurs 10 (afin par exemple d'être formés au cours du procédé de fabrication de la matrice de micro-polariseurs 10).

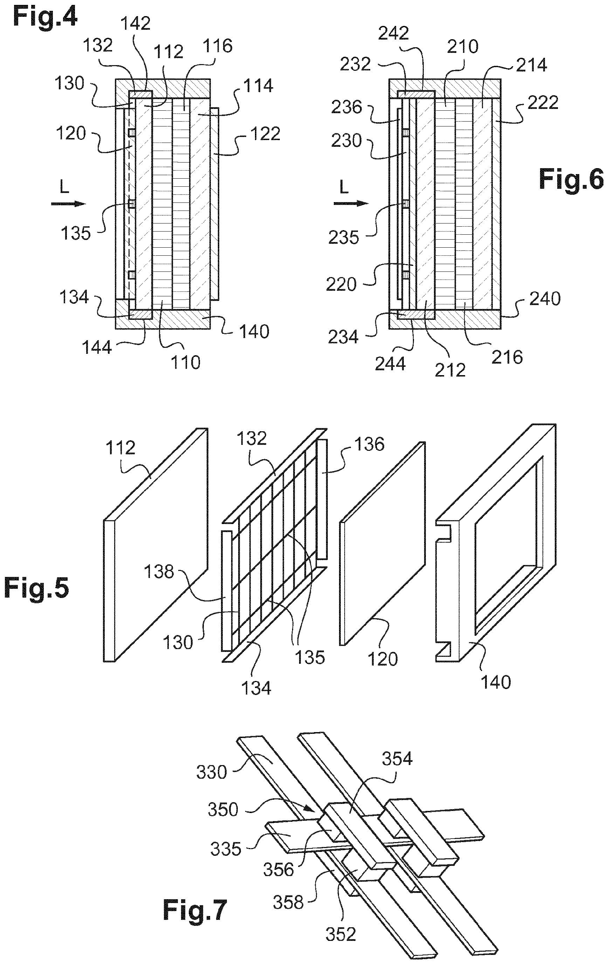

La figure 4 présente un second exemple de réalisation de l'écran 5.

Dans ce second exemple, l'écran 5 comprend, dans cet ordre dans le sens du trajet de la lumière L (c'est-à-dire de la partie située du côté de la source de lumière 6 au côté situé vers le dispositif de projection 4), les mêmes éléments (ou lames) en forme de plaque que dans le premier exemple décrit ci-dessus, à savoir (chaque élément étant en contact avec le ou les éléments voisin(s)) :
- un polariseur d'entrée 120 ;
- une première vitre 112 ;
- une matrice de micro-polariseurs 110 ;
- une matrice d'éléments colorés 116 ;
- une seconde vitre 114 ;
- un polariseur de sortie 122.

La constitution de la matrice de micro-polariseurs 110 et le fonctionnement de l'écran 5 sont identiques à ceux présentés ci-dessus en référence aux figures 2 et 3, et ne seront donc pas décrits à nouveau.

Dans le présent exemple de réalisation, on a placé sur la face de la première vitre 112 destinée à recevoir le polariseur d'entrée 120, avant dépôt du polariseur d'entrée 120, un ensemble d'éléments longitudinaux 130, 135 reliés à chacune de leurs extrémités à une plaque 132, 134, 136, 138.

Après dépôt du polariseur d'entrée 120, les éléments longitudinaux 130, 135 se trouvent interposés entre le polariseur d'entrée 120 et la première vitre 112.

Comme bien visible en figure 5, les éléments longitudinaux 130, 135 comprennent un premier groupe d'éléments longitudinaux 130 parallèles entre eux, orientés selon une première direction (verticale en figure 5), et un second groupe d'éléments longitudinaux 135 parallèles entre eux, orientés selon une seconde direction (horizontale en figure 5) perpendiculaire à la première direction. Les éléments longitudinaux 130, 135 forment ainsi une grille, interposée ici entre la première vitre 112 et le polariseur d'entrée 120.

Deux plaques 132, 134 sont reliées aux éléments longitudinaux 130 du premier groupe (chaque élément longitudinal 130 étant ici relié à la plaque 132 à une extrémité et à la plaque 134 à son autre extrémité) ; deux autres plaques 136, 138 sont reliées, de manière similaire, aux éléments longitudinaux 135 du second groupe.

Les éléments longitudinaux 130, 135 sont ici métalliques afin de permettre une bonne évacuation de la chaleur générée au sein de l'écran 5. Ces éléments longitudinaux 130, 135 peuvent être, par exemple, des fils métalliques.

Les plaques 132, 134, 136, 138 sont par exemple elles aussi métalliques, éventuellement réalisées dans le même matériau que les éléments longitudinaux 130, 135. Les plaques 132, 134, 136, 148 sont ici respectivement disposées au contact de chacune des faces de la tranche de la première vitre 112. On peut d'ailleurs prévoir que le dimensionnement de l'ensemble plaques ― éléments longitudinaux soit tel que cet ensemble puisse être monté sur la première vitre 112 avant dépôt du polariseur d'entrée 120.

Chaque élément longitudinal 130, 135 est en outre disposé au droit d'une piste conductrice de la matrice de micro-polariseurs 110 afin de perturber au minimum la transmission de la lumière à travers l'écran 5. La largeur des éléments longitudinaux 130, 135 (c'est-à-dire leur diamètre dans le cas de fils) est de préférence (mais non nécessairement) inférieure à la largeur des pistes conductrices de la matrice de micro-polariseurs 110 ; dans ce cas en effet, les éléments longitudinaux 130, 135 ne perturbent aucunement la transmission de la lumière à travers l'écran 5.

L'écran 5 comprend également un couvercle dissipateur 140, ici métallique, qui s'étend sur le pourtour de l'écran 5, en entourant une partie au moins des éléments en forme de plaque 120, 112, 110, 114, 116.

Le couvercle dissipateur 140 est au contact de chacune des plaques 132, 134, 136, 138 sur une partie au moins de la surface extérieure de ces plaques 132, 134, 136, 138. La chaleur absorbée au sein de l'écran 5 par les éléments longitudinaux 130, 135, puis conduite par les éléments longitudinaux 130, 135 jusqu'aux plaques 132, 134, 136, 138, peut ainsi être évacuée au niveau du couvercle dissipateur 140.

On prévoit par exemple, comme visible en figure 4, que chacune des plaques 132, 134, 136, 138 soit reçue dans un logement 142, 144 formé à cet effet dans le couvercle dissipateur 140.

Dans l'exemple qui vient d'être décrit, les éléments longitudinaux 130, 135 sont solidaires des plaques 132, 134, 136, 138, mais séparés, avant assemblage, des autres pièces formant l'écran 5 (notamment le polariseur d'entrée 120 et la première vitre 112). On peut prévoir en variante que les éléments longitudinaux 130, 135 soient déposés sur le polariseur d'entrée 120 ou sur la première vitre 112 avant assemblage.

La figure 6 présente un troisième exemple de réalisation de l'écran 5.

Dans ce troisième exemple, l'écran 5 comprend, dans cet ordre dans le sens du trajet de la lumière L (c'est-à-dire de la partie située du côté de la source de lumière 6 au côté situé vers le dispositif de projection 4), les mêmes éléments (ou lames) en forme de plaque que dans le premier exemple décrit ci-dessus, à savoir (chaque élément étant en contact avec le ou les éléments voisin(s)) :
- un polariseur d'entrée 220 ;
- une première vitre 212 ;
- une matrice de micro-polariseurs 210 ;
- une matrice d'éléments colorés 216 ;
- une seconde vitre 214 ;
- un polariseur de sortie 222.

La constitution de la matrice de micro-polariseurs 210 et le fonctionnement de l'écran 5 sont identiques à ceux présentés ci-dessus en référence aux figures 2 et 3, et ne seront donc pas décrits à nouveau.

Dans le présent exemple de réalisation, la face extérieure (c'est-à-dire ici la face d'entrée) du polariseur d'entrée 220 reçoit un ensemble d'éléments longitudinaux 230, 235 reliés à chacune de leurs extrémités à une plaque 232, 234, 236.

Comme dans le cas des éléments longitudinaux 130, 135 bien visibles en figure 5, les éléments longitudinaux 230, 235 comprennent un premier groupe d'éléments longitudinaux 230 parallèles entre eux, orientés selon une première direction, et un second groupe d'éléments longitudinaux 235 parallèles entre eux, orientés selon une seconde direction perpendiculaire à la première direction. Les éléments longitudinaux 230, 235 forment ainsi une grille, disposée ici sur le polariseur d'entrée 120.

Deux plaques 232, 234 sont reliées aux éléments longitudinaux 230 du premier groupe (chaque élément longitudinal 230 étant ici relié à la plaque 232 à une extrémité et à la plaque 234 à son autre extrémité) ; deux autres plaques 236 sont reliées, de manière similaire, aux éléments longitudinaux 235 du second groupe.

Les éléments longitudinaux 230, 235 sont ici métalliques afin de permettre une bonne évacuation de la chaleur générée au niveau du polariseur d'entrée 220. Ces éléments longitudinaux 230, 235 peuvent être, par exemple, des fils métalliques.

Les plaques 232, 234, 236 sont par exemple elles aussi métalliques, éventuellement réalisées dans le même matériau que les éléments longitudinaux 230, 235. Les plaques 232, 234, 236 sont ici respectivement disposées au contact de chacune des faces de la tranche du polariseur d'entrée 220 (et s'étendent respectivement en outre dans l'exemple de la figure 6 au contact de chacune de faces de la tranche de la première vitre 212). On peut d'ailleurs prévoir que le dimensionnement de l'ensemble plaques ― éléments longitudinaux soit tel que cet ensemble puisse être monté sur le polariseur d'entrée 220 avant montage du polariseur d'entrée dans le couvercle dissipateur 240 mentionné plus bas.

Chaque élément longitudinal 230, 235 est en outre disposé au droit d'une piste conductrice de la matrice de micro-polariseurs 210 afin de perturber au minimum la transmission de la lumière à travers l'écran 5. La largeur des éléments longitudinaux 230, 235 (c'est-à-dire leur diamètre dans le cas de fils) est de préférence (mais non nécessairement) inférieure à la largeur des pistes conductrices de la matrice de micro-polariseurs 210 ; dans ce cas en effet, les éléments longitudinaux 230, 235 ne perturbent aucunement la transmission de la lumière à travers l'écran 5.

L'écran 5 comprend également un couvercle dissipateur 240, ici métallique, qui s'étend sur le pourtour de l'écran 5, en entourant une partie au moins des éléments en forme de plaque 220, 212, 210, 214, 216, 222.

Le couvercle dissipateur 240 est au contact de chacune des plaques 232, 234, 236 sur une partie au moins de la surface extérieure de ces plaques 232, 234, 236. La chaleur absorbée au sein de l'écran 5 par les éléments longitudinaux 230, 235, puis conduite par les éléments longitudinaux 230, 235 jusqu'aux plaques 232, 234, 236, peut ainsi être évacuée au niveau du couvercle dissipateur 240.

On prévoit par exemple, comme visible en figure 6, que chacune des plaques 232, 234, 236 soit reçue dans un logement 242, 244 formé à cet effet dans le couvercle dissipateur 240.

Dans l'exemple qui vient d'être décrit, les éléments longitudinaux 230, 235 sont solidaires des plaques 232, 234, 236 en vue de leur montage dans l'écran 5, au contact du polariseur d'entrée 220. On peut toutefois prévoir en variante que les éléments longitudinaux 230, 235 soient liés directement au couvercle dissipateur 240 (les plaques 232, 234, 236 pouvant alors être omises). Dans ce cas, les éléments longitudinaux 230, 235 sont par exemple réalisés au moyen de fils métalliques du même type que les fils de connexion (en anglais : *"bonding wires"*) utilisés pour la connexion des circuits intégrés, ces fils métalliques étant par exemple soudés au couvercle dissipateur 240 à chacune de leur extrémité.

La figure 7 représente une cellule thermoélectrique 350 utilisable dans un mode de réalisation de l'invention.

Selon cette variante, l'écran comporte également des éléments longitudinaux 330, 335, qui sont ici des électrodes destinées à l'alimentation électrique de la cellule thermoélectrique 350 (également dénommée *"module Peltier*" car utilisant l'effet Peltier pour produire un refroidissement).

Comme dans les deux exemples de réalisation précédemment décrits, les éléments longitudinaux (c'est-à-dire ici les électrodes 330, 335) comprennent un premier groupe d'éléments longitudinaux (électrodes) 330 parallèles entre eux, orientés selon une première direction, et un second groupe d'éléments longitudinaux (électrodes) 335 parallèles entre eux, orientés selon une seconde direction perpendiculaire à la première direction.

Chaque électrode 330, 335 est disposée au droit d'une piste conductrice d'une matrice de micro-polariseurs de l'écran afin de perturber au minimum la transmission de la lumière à travers l'écran. La largeur des électrodes 330, 335 peut en outre être inférieure à la largeur des pistes conductrices de la matrice de micro-polariseurs, ce qui permet dans ce cas de ne perturber aucunement la transmission de la lumière à travers l'écran.

On note que, bien que cela n'apparaisse pas sur la figure 7, les électrodes 330 du premier groupe sont isolées (électriquement) des électrodes 335 du second groupe (sauf en ce qui concerne leur connexion via la cellule thermoélectrique 350 comme décrit ci-dessous).

À certaines au moins des intersections d'une électrode 330 du première groupe et d'une électrode 335 du second groupe est placée une cellule thermoélectrique telle que la cellule thermoélectrique 350 décrite à présent.

Une telle cellule thermoélectrique 350 comprend un premier élément à semi-conducteur 352 (par exemple dopé P), une plaque froide 354 et un second élément à semi-conducteur 356 (par exemple dopé N).

Dans une telle cellule thermoélectrique 350, une électrode 330 du premier groupe, le premier élément à semi-conducteur 352, la plaque froide 354, le second élément à semi-conducteur 356 et une électrode 335 du second groupe sont branchés en série de sorte qu'ils peuvent être parcourus par un courant qui génère un refroidissement au niveau de la plaque froide 354.

La plaque froide 354 est par exemple placée au contact du polariseur d'entrée de l'écran de manière à absorber la chaleur générée au sein de ce polariseur d'entrée.

La grille active thermale peut être incluse dans un film polymère transparent afin de garantir sa tenue mécanique.

La cellule thermoélectrique 350 peut comprendre en outre une plaque chaude 358 (située au contact d'au moins une électrode, ici l'électrode 330) qui transmettra à l'air environnant la chaleur.

Dans les exemples décrits ci-dessus, les éléments longitudinaux 30, 130, 135, 230, 235, 330, 335 sont placés au contact du polariseur d'entrée 20, 120, 220 et visent donc principalement à absorber et évacuer la chaleur générée (par absorption de la lumière) au niveau de ce polariseur d'entrée 20, 120, 220. On remarque toutefois que l'invention pourrait s'appliquer de la même manière (en variante ou en combinaison) au niveau du polariseur de sortie, en implantant les éléments longitudinaux à proximité (voire au contact) du polariseur de sortie.

## Revendications

1. Ecran à cristaux liquides comprenant une matrice d'éléments à cristaux liquides (17), des transistors (18) associés chacun à l'un desdits éléments (17) et des pistes conductrices (19) de connexion auxdits transistors (18), un dispositif d'absorption de chaleur comprenant une pluralité d'éléments longitudinaux (30 ; 130, 135 ; 230, 235 ; 330, 335) disposés chacun au droit d'une desdites pistes conductrices (19) de sorte à minimiser l'obstruction de la transmission d'une lumière (L), disposée de manière à éclairer l'écran à cristaux liquides (17), provoquée par ces éléments longitudinaux, et **caractérisé en ce qu'**au moins un élément longitudinal (330 ; 335) est une électrode d'alimentation d'une cellule à effet thermoélectrique (350).

2. Ecran à cristaux liquides selon la revendication 1, dans lequel les pistes conductrices (19) sont opaques.

3. Ecran à cristaux liquides selon la revendication 1 ou 2, dans lequel les éléments longitudinaux (30 ; 130, 135 ; 230, 235 ; 330, 335) sont métalliques.

4. Ecran à cristaux liquides selon l'une des revendications 1 à 3, dans lequel un premier ensemble desdites pistes conductrices (19) s'étend selon une première direction et dans lequel un second ensemble desdites pistes conductrices (19) s'étend selon une seconde direction perpendiculaire à la première direction.

5. Ecran à cristaux liquides selon la revendication 4, dans lequel les éléments longitudinaux (30) s'étendent selon la première direction.

6. Ecran à cristaux liquides selon la revendication 4, dans lequel un premier groupe d'éléments longitudinaux (130 ; 230 ; 330) s'étend selon la première direction et dans lequel un second groupe d'éléments longitudinaux (135 ; 235 ; 335) s'étend selon la seconde direction.

7. Ecran à cristaux liquides selon l'une des revendications 1 à 6, dans lequel une pluralité desdits éléments longitudinaux (30 ; 130, 135 ; 230, 235) est reliée à une plaque (32 ; 32' ; 132 ; 134 ; 136 ; 138 ; 232 ; 234 ; 236) à au moins une de leurs extrémités.

8. Ecran à cristaux liquides selon la revendication 7, dans lequel la plaque (32 ; 32' ; 132 ; 134 ; 136 ; 138 ; 232 ; 234 ; 236) est disposée au contact d'un élément (40 ; 140 ; 240) dissipateur de chaleur.

9. Ecran à cristaux liquides selon la revendication 8, dans lequel l'élément dissipateur est un couvercle (40 ; 140 ; 240).

10. Ecran à cristaux liquides selon l'une des revendications 1 à 9, dans les éléments longitudinaux sont interposés entre une vitre et la matrice d'éléments à cristaux liquides.

11. Ecran à cristaux liquides selon l'une des revendications 1 à 9, dans lequel les éléments longitudinaux (30 ; 130, 135) sont interposés entre un polariseur (20 ; 120) et une vitre (12 ; 112).

12. Ecran à cristaux liquides selon l'une des revendications 1 à 9, dans lequel les éléments longitudinaux (230 ; 235) sont disposés sur une face externe d'un polariseur (220).

13. Dispositif de génération d'image comprenant un écran à cristaux liquides selon l'une des revendications 1 à 12, et une source de lumière disposée de manière à éclairer l'écran à cristaux liquides.

14. Afficheur tête haute (1) comprenant un dispositif de génération d'image (3) selon la revendication 13 et un dispositif de projection d'images (4) adapté à transmettre en direction d'une lame semi-transparente (2) les images générées par le dispositif de génération d'image (3).

## Patentansprüche

1. Flüssigkristallbildschirm umfassend eine Matrix aus Flüssigkristallelementen (17), Transistoren (18), die jeweils einem der Elemente (17) zugeordnet sind, und Leiterbahnen (19) zum Anschluss an die Transistoren (18), eine Wärmeabsorptionsvorrichtung, die eine Mehrzahl von Längselementen (30; 130, 135; 230, 235; 330, 335) umfasst, die jeweils gegenüber einer der Leiterbahnen (19) angeordnet sind, um die Blockierung des Durchtritts eines Lichts (L), das angeordnet ist, den Flüssigkristallbildschirm (17) zu beleuchten, die von diesen Längselementen bewirkt wird, zu minimieren, und **dadurch gekennzeichnet, dass** wenigstens ein Längselement (330 ; 335) eine Elektrode zur Versorgung einer Zelle mit thermoelektrischer Wirkung (350) ist.

2. Flüssigkristallbildschirm nach Anspruch 1, wobei die Leiterbahnen (19) lichtundurchlässig sind.

3. Flüssigkristallbildschirm nach Anspruch 1 oder 2, wobei die Längselemente (30; 130, 135; 230, 235; 330, 335) metallisch sind.

4. Flüssigkristallbildschirm nach einem der Ansprüche 1 bis 3, wobei sich eine erste Anordnung der Leiterbahnen (19) in einer ersten Richtung erstreckt und sich eine zweite Anordnung der Leiterbahnen (19) in einer zweiten Richtung senkrecht zur ersten Richtung erstreckt.

5. Flüssigkristallbildschirm nach Anspruch 4, wobei sich die Längselemente (30) in der ersten Richtung erstrecken.

6. Flüssigkristallbildschirm nach Anspruch 4, wobei sich eine erste Gruppe von Längselementen (130; 230; 330) in der ersten Richtung erstreckt und sich eine zweite Gruppe von Längselementen (135; 235; 335) in der zweiten Richtung erstreckt.

7. Flüssigkristallbildschirm nach einem der Ansprüche 1 bis 6, wobei eine Mehrzahl der Längselemente (30; 130, 135; 230, 235) an mindestens einem ihrer Enden mit einer Platte (32; 32'; 132; 134; 136; 138; 232; 234; 236) verbunden ist.

8. Flüssigkristallbildschirm nach Anspruch 7, wobei die Platte (32; 32'; 132; 134; 136; 138; 232; 234; 236) in Kontakt mit einem Wärmeableitungselement (40; 140; 240) angeordnet ist.

9. Flüssigkristallbildschirm nach Anspruch 8, wobei das Ableitungselement ein Deckel (40; 140; 240) ist.

10. Flüssigkristallbildschirm nach einem der Ansprüche 1 bis 9, wobei die Längselementen zwischen einer Scheibe und der Matrix aus Flüssigkristallelementen angeordnet sind.

11. Flüssigkristallbildschirm nach einem der Ansprüche 1 bis 9, wobei die Längselemente (30; 130, 135) zwischen einem Polarisator (20; 120) und einer Scheibe (12; 112) angeordnet sind.

12. Flüssigkristallbildschirm nach einem der Ansprüche 1 bis 9, wobei die Längselemente (230; 235) auf einer Außenseite eines Polarisators (220) angeordnet sind.

13. Bilderzeugungsvorrichtung umfassend einen Flüssigkristallbildschirm nach einem der Ansprüche 1 bis 12 und eine Lichtquelle, die angeordnet ist, den Flüssigkristallbildschirm zu beleuchten.

14. Head-up-Display (1) umfassend eine Bilderzeugungsvorrichtung (3) nach Anspruch 13 und eine Bildprojektionsvorrichtung (4), die geeignet ist, die Bilder, die von der Bilderzeugungsvorrichtung (3) erzeugt werden, in Richtung eines halbtransparenten Blattes (2) zu übertragen.

## Claims

1. Liquid-crystal display comprising a matrix array of liquid-crystal elements (17), transistors (18) each associated with one of said elements (17) and conductive tracks (19) connecting said transistors (18), and a heat-absorbing device comprising a plurality of longitudinal elements (30; 130, 135; 230, 235; 330, 335) each placed plumb with one of said conductive tracks (19) so as to minimize the obstruction, caused by these longitudinal elements, of the transmission of light (L) provided to illuminate the liquid-crystal display (17), and **characterized in that** at least one longitudinal element (330; 335) is a supply electrode of a thermoelectric cell (350) .

2. Liquid-crystal display according to Claim 1, wherein the conductive tracks (19) are opaque.

3. Liquid-crystal display according to Claim 1 or 2, wherein the longitudinal elements (30; 130, 135; 230, 235; 330, 335) are made of metal.

4. Liquid-crystal display according to one of Claims 1 to 3, wherein a first set of said conductive tracks (19) extends in a first direction and wherein a second set of said conductive tracks (19) extends in a second direction perpendicular to the first direction.

5. Liquid-crystal display according to Claim 4, wherein the longitudinal elements (30) extend in the first direction.

6. Liquid-crystal display according to Claim 4, wherein a first group of longitudinal elements (130; 230; 330) extends in the first direction and wherein a second group of longitudinal elements (135; 235; 335) extends in the second direction.

7. Liquid-crystal display according to one of Claims 1 to 6, wherein a plurality of said longitudinal elements (30; 130, 135; 230, 235) is joined to a sheet (32; 32'; 132; 134; 136; 138; 232; 234; 236) at at least one of their ends.

8. Liquid-crystal display according to Claim 7, wherein the sheet (32; 32'; 132; 134; 136; 138; 232; 234; 236) is placed in contact with a heat-dissipating element (40; 140; 240).

9. Liquid-crystal display according to Claim 8, wherein the dissipating element is a cover (40; 140; 240).

10. Liquid-crystal display according to one of Claims 1 to 9, wherein the longitudinal elements are interposed between a transparent panel and the matrix array of liquid-crystal elements.

11. Liquid-crystal display according to one of Claims 1 to 9, wherein the longitudinal elements (30; 130, 135) are interposed between a polarizer (20; 120) and a transparent panel (12; 112).

12. Liquid-crystal display according to one of Claims 1 to 9, wherein the longitudinal elements (230; 235) are placed on an external face of a polarizer (220).

13. Image-generating device comprising a liquid-crystal display according to one of Claims 1 to 12, and a light source placed so as to illuminate the liquid-crystal display.

14. Head-up display (1) comprising an image-generating device (3) according to Claim 13 and an image-projecting device (4) that is suitable for transmitting in the direction of a semi-transparent plate (2) the images generated by the image-generating device (3).
